# EUROPÄISCHE PATENTSCHRIFT

(11) **EP 1 140 602 B1**
(45) Veröffentlichungstag und Bekanntmachung des Hinweises auf die Patenterteilung: **30.07.2003**
(21) Anmeldenummer: 99965442.9
(22) Anmeldetag: 08.12.1999
(51) Int. Cl.: B61D 27/00, F16F 15/04

(54) **VORRICHTUNG ZUR SCHWINGUNGSDÄMFENDEN LAGERUNG EINER DRUCKLUFTERZEUGUNGSANLAGE AN EINEM BEFESTIGUNGSTRÄGER EINES SCHIENENFAHRZEUGS**
DEVICE FOR THE VIBRATION-ABSORBING MOUNTING OF A COMPRESSED-AIR GENERATOR ON A MOUNTING SUPPORT OF A RAIL VEHICLE
DISPOSITIF PERMETTANT UN MONTAGE ANTIVIBRATILE D'UN GENERATEUR DE D'AIR COMPRIME SUR UN SUPPORT DE FIXATION DE VEHICULE SUR RAILS

(30) Priorität: 23.12.1998 DE 19859897
(43) Veröffentlichungstag der Anmeldung: 10.10.2001
(73) Patentinhaber: KNORR-BREMSE Systeme für Schienenfahrzeuge GmbH, 80809 München (DE)
(72) Erfinder: HARTL, Michael, D-82008 Unterhaching (DE); MEYER, Frank, D-81543 München (DE); FRANK, Robert, D-82110 Germering (DE); EHINGER, Markus, D-85716 Unterschleissheim (DE)
(74) Vertreter: Maiwald Patentanwalts GmbH
(86) Internationale Anmeldenummer: EP9909654
(87) Internationale Veröffentlichungsnummer: WO00038967

(56) Entgegenhaltungen:
- FR-A- 2 456 631
- GB-A- 439 667
- US-A- 4 784 585
- US-A- 5 132 584
- US-A- 5 219 037
- US-A- 5 342 179
- PATENT ABSTRACTS OF JAPAN vol. 1998, no. 12, 31. Oktober 1998 (1998-10-31) & JP 10 185411 A (DAEWOO ELECTRON CO LTD), 14. Juli 1998 (1998-07-14)
- PATENT ABSTRACTS OF JAPAN vol. 004, no. 102 (M-022), 22. Juli 1980 (1980-07-22) & JP 55 060739 A (AKIMOTO MASAO), 8. Mai 1980 (1980-05-08)

## Beschreibung

Die vorliegende Erfindung betrifft eine Vorrichtung zur schwingungsdämpfenden Lagerung einer Drucklufterzeugungsanlage an einem Befestigungsträger eines Schienenfahrzeuges mit selbsttragender Struktur, wie sie aus der Drack Schrift GB 5 219 037 bekannt ist.

Drucklufterzeugungsanlagen erzeugen die für den Betrieb einer Druckluftbremse und anderer pneumatischer Einrichtungen in Schienenfahrzeugen erforderliche Druckluft. Hierzu werden insbesondere ein- oder mehrstufige Kolbenluftpresser vorgesehen, die konstruktionsbedingt neben Massenkräften und Massenmomenten auch Momente aus dem Tangentialkraftverlauf erzeugen. Eine Isolation der genannten Kräfte bzw. Momente in horizontaler und vertikaler Richtung erfolgte bisher durch Anordnung gleichartiger elastischer Lagervorrichtungen an der Fahrzeugstruktur, die aus einem Federelement, insbesondere einer Gummifeder, bestehen. Vor dem Hintergrund moderner Leichtbauweisen im Schienenfahrzeugbau mit selbsttragenden Strukturen aus dünnem Blech und Aluminium jedoch werden die an die Schwingungsisolierung des Schienenfahrzeugs gemachten Anforderungen mit der genannten Lagervorrichtung nicht immer erfüllt. So ist bekannt, daß bei Wagenkastenstrukturen in Leichtbauweise der Isoliergrad herkömmlicher Lagervorrichtungen dort unzureichend ist, wo wagenkastenseitig konstruktionsbedingte Resonanzen auftreten.

Bei der JP 10185411 wird zur schwingungsdämpfenden Lagerung eines als Kompressor ausgebildeten Drucklufterzeugungsanlage an einem Befestigungsträger ein erstes als Spiralfeder ausgebildetes Federelement vorgesehen, das über beidseitige Trägerplatten zwischen dem Befestigungsträger und dem Kompressor angeordnet ist. Zusätzlich sind beidseits weitere gleichartige Federelemente parallelgeschaltet. Die weiteren, parallelgeschalteten Federelemente sind zylindrische, stoßdämpfende Rohrkörper, die aus einem Federstahlblech hergestellt sind. Diese schwingungsdämpfende Lagerung entfaltet ihre Wirkung vornehmlich in vertikaler Richtung. Horizontal erfolgt eine Schwingungsdämpfung lediglich in Längsrichtung, da die Formgebung des Rohrkörpers eine Bewegung in Querrichtung ausschließt. Somit werden horizontale Querstöße bei dieser schwingungsdämpfenden Lagerung schlecht absorbiert.

Demgegenüber liegt der vorliegenden Erfindung die Aufgabe zugrunde, eine Vorrichtung zur schwingungsdämpfenden Lagerung einer Drucklufterzeugungsanlage an einem Befestigungsträger eines Schienenfahrzeugs zu schaffen, bei dem eine bessere isolierende Wirkung bezüglich aller Raumachsen erzielt wird, ohne die lateralen und longitudinalen Auslenkungen der Drucklufterzeugungsanlage beträchtlich zu vergrößern.

Diese Aufgabe wird durch die im Anspruch 1 dargestellten Merkmale gelöst.

Der Erfindung liegt in überraschender Weise die Erkenntnis zugrunde, daß drei Bedingungen für die Lösung der gestellten Aufgabe vorliegen müssen: zunächst muß ein zweites Federelement vorgesehen sein, an dem die Drucklufterzeugungsanlage angeordnet ist. Das zweite Federelement oder das erste Federelement müssen des weiteren eine Federsteifigkeit in im wesentlichen vertikaler Richtung aufweisen, die höchstens halb so groß ist, wie ihre Federsteifigkeit in im wesentlichen horizontaler Richtung. Schließlich müssen das erste Federelement und das zweite Federelement in Reihe geschaltet sein. Mit dieser Vorrichtung wird nicht nur eine Schwingungsisolierung bzw. Schwingungsdämpfung erzielt, die weit über das hinausgeht, was aus dem Stand der Technik bekannt ist, sondern auch vermieden, daß sich die longitudinalen und lateralen Auslenkungen der Druckluftanlage im Betrieb beträchtlich vergrößern. Messungen haben ergeben, daß die Beschleunigungen eines Wagenkastenbodens eines Schienenfahrzeugs auf bis zu 30 % der aus dem Stand der Technik bekannten Werte verringert werden konnten, wenn das erste Federelement ein Gummielement oder eine Gummiverbundelement und das zweite Federelement eine Drahtseilfeder ist.

In vorteilhafter Weise können das erste Federelement und das zweite Federelement mittels eines Verbindungselements miteinander verbunden werden. Hierdurch ist eine einfache Konstruktion der erfindungsgemäßen Vorrichtung gewährleistet. In besonders vorteilhafter Weise ist das Verbindungselement als Traverse oder Adapterplatte ausgebildet, die als Tilgermasse wirken. Durch eine Variation der Masse des Verbindungselementes bzw. der Traverse oder der Adapterplatte kann ein zusätzlicher tilgender Einfluß auf eine mit der erfindungsgemäßen Vorrichtung ausgestattete selbsttragende Struktur erzielt werden.

Weitere Merkmale und Vorteile der vorliegenden Erfindung ergeben sich anhand der nachfolgenden Beschreibung unter Berücksichtigung der Zeichnung, in der
- Figur 1: eine erste Ausführungsform der erfindungsgemäßen Vorrichtung,
- Figur 2: eine zweite Ausführungsform der vorliegenden Erfindung,
- Figur 3: eine dritte Ausführungsform der erfindungsgemäßen Vorrichtung, und
- Figur 4: eine vierte Ausführungsform der erfindungsgemäßen Vorrichtung zeigt.

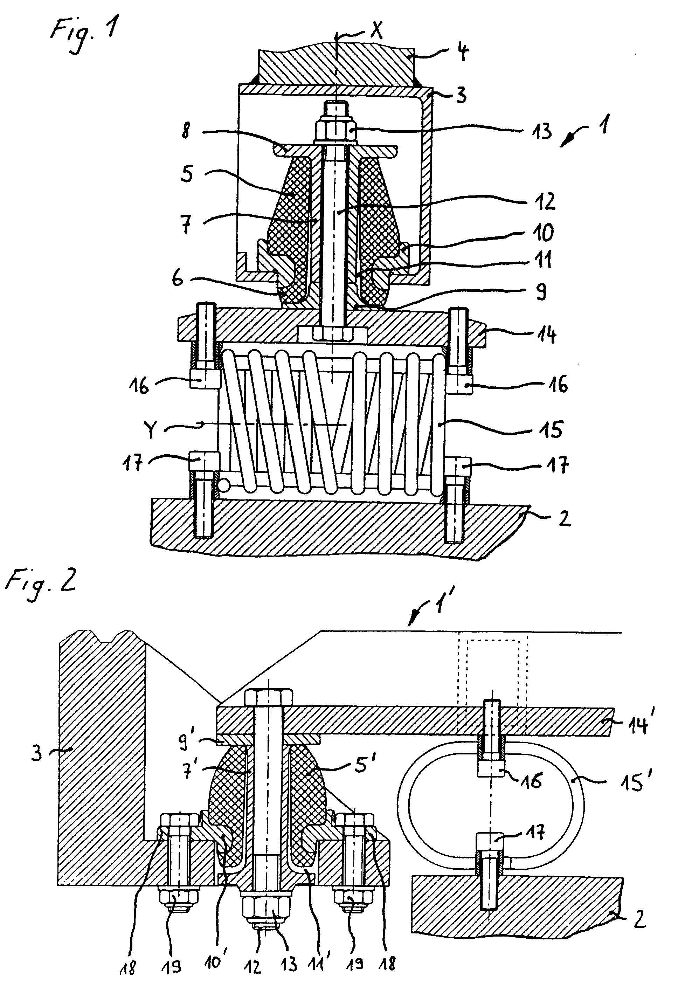

In Figur 1 ist eine Vorrichtung 1 zur schwingungsdämpfenden Lagerung einer schematisch dargestellten Drucklufterzeugungsanlage 2 an einem ebenfalls schematisch dargestellten Befestigungsträger 3 gezeigt. Die Drucklufterzeugungsanlage 2 ist in dem hier dargestellten Beispiel ein mehrstufiger Kolbenluftpresser. Dies ist jedoch nicht zwingend, sondern es kann auch ein einstufiger Kolbenluftpresser, ein Schraubenluftpresser oder dergleichen vorgesehen sein.

Der Befestigungsträger 3 ist im wesentlichen als U-Profil ausgebildet, das an einem schematisch dargestellten Teil eines Wagenkastenbodens 4 befestigt ist. An der dem Wagenkastenboden 4 abgewandten Seite weist der Befestigungsträger 3 eine Öffnung auf, in die ein erstes Federelement 5 eingebracht ist. Das erste Federelement 5 ist im wesentlichen als hohler Kegelstumpf ausgebildet, der mit seiner Längsachse X vertikal ausgerichtet ist. Das erste Federelement 5 weist an seinem der Drucklufterzeugungsanlage 2 zugewandten Ende einen Absatz 6 auf. Das erste Federelement 5 umgibt eine Befestigungshülse 7, die an ihrem dem Befestigungsträger 3 zugewandten Ende einen ersten Anlageflansch 8 und an ihrem der Drucklufterzeugungsanlage 2 zugewandten Ende einen zweiten, separat an der Befestigungshülse 7 angeordneten Anlageflansch 9 aufweist. Gegen den ersten Anlageflansch 8 liegt das in Figur 1 obere Ende des ersten Federelementes 5 an. Gegen den zweiten Anlageflansch 9 liegt in unbelastetem Zustand (ohne Gewicht des Kompressors) der Absatz 6 des ersten Federelementes 5 an. Die Befestigung des ersten Federelementes 5 in der Öffnung des Befestigungsträgers 3 erfolgt mittels eines Zwischenrings 10, der im Bereich des Absatzes 6 gegen das erste Federelement 5 und den Befestigungsträger 3 anliegt.

Wie Figur 1 zu entnehmen ist, liegt das erste Federelement 5 nicht mit seiner gesamten Länge gegen die Befestigungshülse 7 an. Vielmehr ist zwischen der Innenfläche des ersten Federelements 5. und der Außenfläche des Befestigungshülse 7 ein Raum 11 ausgebildet. In diesem Raum 11 kann sich das erste Federelement 5 elastisch verformen.

Eine Vorspannung des ersten Federelementes 5 wird mittels einer Schraube 12 und daran befestigter Mutter 13 erzeugt werden, in dem der Abstand zwischen erstem Anlageflansch 8 und zweitem Anlageflansch 9 mittels der Mutter 13 festgelegt wird. Selbstverständlich ist es auch möglich, den Abstand zwischen dem ersten Anlageflansch 8 und dem zweiten Anlageflansch 9 - und damit die Vorspannung auf das erste Federelement 5 - durch eine Lageänderung veränderlich auszubilden.

Gegen das erste Federelement 5 ist ebenfalls durch die Schraube 12 und die Mutter 13 ein Verbindungselement 14 befestigt, das gegen den zweiten Anlageflansch 9 zur Anlage kommt. Das Verbindungselement 14 dient zur Kopplung des ersten Federelementes 5 mit einem zweiten Federelement 15, das mittels Schrauben 16 an dem Zwischenelement 14 angeschraubt ist. Aus Figur 1 ergibt sich, daß das erste Federelement 5 als Gummifeder ausgeführt ist, während das zweite Federelement 15 als zylindrisch ausgestaltete Drahtseilfeder gestaltet ist. Es ist jedoch gleichfalls möglich, andere Federtypen vorzusehen.

Die Längsachse Y des zweiten Federelementes 15 ist in dem hier dargestellten Beispiel im wesentlichen horizontal ausgerichtet. Damit stehen die Längsachse X des ersten Federelementes 5 und die Längsachse Y des zweiten Federelementes 15 orthogonal zueinander. Konstruktionsbedingt ist das erste Federelement 5 in Horizontalrichtung steif ausgebildet, während das zweite Federelement 15 in Horizontalrichtung weich ausgestaltet ist. Die Federsteifigkeit des zweiten Federelementes 15 ist derart gewählt, daß sie in Vertikalrichtung zumindest um den Faktor 2 geringer ist als in Horizontalrichtung. Hierdurch werden in überraschender Weise am Wagenkastenboden 4 Schwingungen gemessen, deren Amplituden bis zu 30 % gegenüber den aus dem Stand der Technik Bekannten reduziert sind. Diese werden nicht nur von dem für das erste Federelement 5 und das zweite Federelement 15 gewählte Materialien und Abmessungen bestimmt, sondern ebenfalls durch die Masse des Verbindungselements 14, das als Tilgermasse für die Schwingungen dient. Aufgrund der Funktion des Verbindungselements 14, nämlich der direkten Verbindung von zweitem Federelement 15 an erstes Federelement 5, kann das Verbindungselement 14 auch als Adapterplatte betrachtet werden. Zur Befestigung der Drucklufterzeugungsanlage 2 an dem zweiten Federelement 15 genügen einfache Schrauben 17.

Wie Figur 1 zu entnehmen ist, hängen sowohl das Verbindungselement 14 als auch die Drucklufterzeugungsanlage 2 einschließlich dem zweiten Federelement 15 an dem ersten Federelement 5. Daher kann diese Anordnung auch als hängend-hängend bezeichnet werden.

In Figur 2 ist eine stehend-hängende Anordnung dargestellt, bei der ein alternativ ausgebildetes Verbindungselement 14' auf dem ersten Verbindungselement 5 steht, während das zweite Federelement 15 und die daran befestigte Drucklufterzeugungsanlage 2 hängen.

Das in Figur 2 dargestellte erste Federelement 5' ist im wesentlichen wie das in Figur 1 beschriebene erste Federelement 5 ausgebildet. Auch hier wird eine Halterung des ersten Federelementes 5' an dem Befestigungsträger 3 mittels eines Zwischenrings 10' vorgenommen. Dieser weist Flanschabschnitte 18 auf, die gegen den Befestigungsträger 3 anliegen. Der Zwischenring 10' ist an dem Befestigungsträger 3 mittels Schrauben 19 und dazugehöriger Muttern befestigt.

Auch in dem hier dargestellten Ausführungsbeispiel umgibt das erste Federelement 5' eine Befestigungshülse 7', die hohl ausgeführt ist. Zwischen der Außenfläche der Befestigungshülse 7' und der Innenfläche des ersten Federelements 5' ist ebenfalls ein Raum 11' ausgebildet, der als Schwingungsraum für das erste Federelement 5' zur Verfügung steht. Der Raum 11' wird durch den Anlageflansch 8, wie bereits zu Figur 1 beschrieben, begrenzt.

Gegen das in Figur 2 obere Ende der Befestigungshülse 7' liegt ein zweiter Anlageflansch 9' an. Dieser dient zum einen als Anlagefläche des in Figur 2 oberen Endes des ersten Federelementes 5' und zum anderen zur Abstützung des Verbindungselementes 14', das mittels der Schraube 12 und der Mutter 13 an dem zweiten Anlageflansch 9' und der Befestigungshülse 7' befestigt ist. In dem hier dargestellten Beispiel ist das Verbindungselement 14' als hohles Rechteckprofil ausgebildet, an dem mittels Schrauben 16 ein zweites Federelement 15' befestigt ist. Auch hier ist das zweite Federelement 15' als spiralförmig ausgebildete Drahtseilfeder ausgebildet, während das erste Federelement 5' eine Gummifeder ist. Die Drucklufterzeugungsanlage 2 ist mittels Schrauben 17 an dem zweiten Federelement 15 aufgehängt. Hinsichtlich der Federsteifigkeiten sind das erste Federelement 5' und das zweite Federelement 15' ähnlich dem ersten Federelement 5 der Figur 1 bzw. dem zweiten Federelement 15 der Figur 1 dimensioniert. Auch hier dient das Verbindungselement 14' als Tilgermasse, die in Form einer Traverse ausgebildet ist

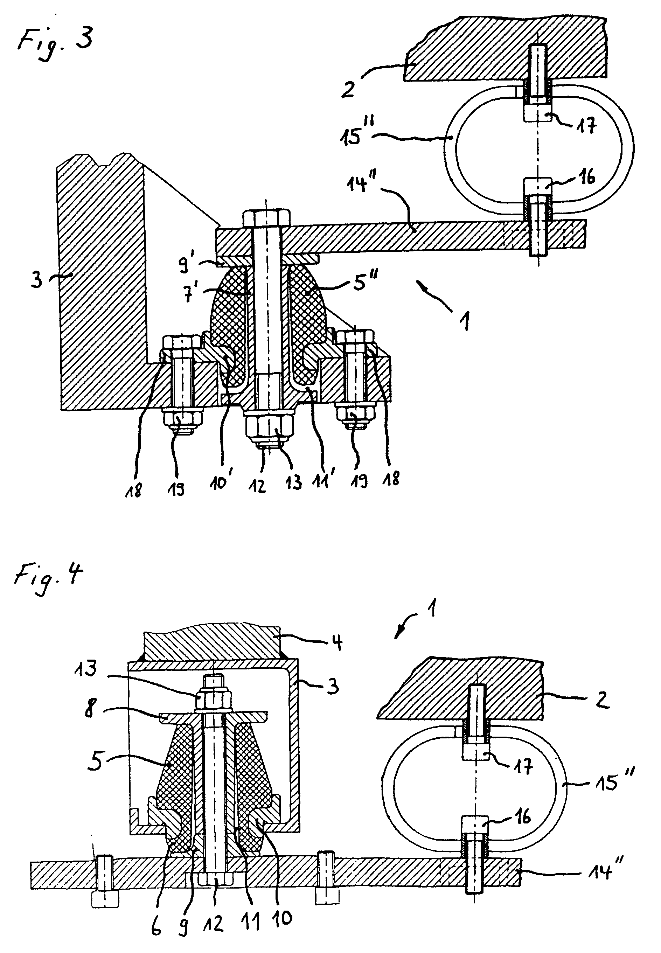

In Figur 3 ist die Anordnung der erfindungsgemäßen Vorrichtung als stehend-stehende Ausführung dargestellt. Dabei entspricht das erste Federelement 5' und die mit diesem verbundenen Bauteile dem in Figur 2 dargestellten ersten Federelement 5' und dem mit diesem verbundenen Bauteilen. Das auf dem zweiten Anlageflansch 9' aufliegende Verbindungselement 14" weist an seinem in Figur 3 rechten Abschnitt eine Bohrung auf, in die eine der Befestigung eines zweiten Federelements 15" dienende Schraube 16 eingeschraubt ist. Das zweite Federelement 15" stützt die Drucklufterzeugungsanlage 2 ab und ist mit dieser mittels Schrauben 17 verbunden.

In Figur 4 schließlich ist eine Anordnung der erfindungsgemäßen Vorrichtung gezeigt, die als hängend-stehende Anordnung bezeichnet werden kann. Hierbei hängt das zweite Verbindungselement 14" an dem ersten Federelement 5, das bereits in Figur 1 beschrieben worden ist. Die Drucklufterzeugungsanlage 2 ist auf dem Verbindungselement 14" mittels dem zweiten Federelement 15" gelagert, wie bereits zu Figur 3 beschrieben worden ist.

### Bezugszeichenliste

- 1,1': Vorrichtung zur schwingungsdämpfenden Lagerung
- 2: Drucklufterzeugungsanlage
- 3: Befestigungsträger
- 4: Wagenkastenboden
- 5, 5', 5": Erstes Federelement
- 6: Absatz
- 7, 7': Befestigungshülse
- 8: Erster Anlageflansch
- 9, 9': Zweiter Anlageflansch
- 10, 10': Zwischenring
- 11, 11': Raum
- 12: Schraube
- 13: Mutter
- 14, 14', 14": Verbindungselement
- 15, 15', 15": Zweites Federelement
- 16: Schrauben
- 17: Schrauben
- 18: Flanschabschnitte
- 19: Schrauben
- X: Längsachse des ersten Federelementes
- Y: Längsachse des zweiten Federelementes

## Patentansprüche

1. Vorrichtung zur schwingungsdämpfenden Lagerung einer Drucklufterzeugungsanlage (2) an einem Befestigungsträger (3) eines Schienenfahrzeuges, mit einem ersten Federelement (5, 5', 5"), das an dem Befestigungsträger (3) befestigbar ist, wobei ein zweites Federelement (15, 15', 15") vorgesehen ist, das mit dem ersten Federelement (5, 5', 5") in Reihe geschaltet ist, wobei eines der beiden Federelemente (5, 5', 5"; 15, 15', 15") in im Wesentlichen vertikaler Richtung eine Federsteifigkeit aufweist, die höchstens halb so groß ist wie die Federsteifigkeit in im Wesentlichen horizontaler Richtung,
**dadurch gekennzeichnet, dass** am zweiten Federelement (15, 15', 15") die Drucklufterzeugungsanlage (2) befestigbar ist, und dass ferner das erste Federelement (5, 5', 5") und das zweite Federelement (15, 15', 15") mittels eines als Tilgermasse ausgebildeten Verbindungselements (14, 14', 14") miteinander verbunden sind.

2. Vorrichtung (1) gemäß Anspruch 1, **dadurch gekennzeichnet, daß** das andere Federelement (5, 5', 5", 15, 15', 15") eine Federsteifigkeit aufweist, die in horizontaler Richtung höchstens so groß ist wie in vertikaler Richtung.

3. Vorrichtung (1) gemäß Anspruch 1 oder 2, **dadurch gekennzeichnet, daß** das erste Federelement (5, 5', 5") ein Gummielement oder ein Gummiverbundelement ist.

4. Vorrichtung (1) gemäß einem der Ansprüche 1 bis 3, **dadurch gekennzeichnet, daß** das zweite Federelement (15, 15', 15") eine Drahtseilfeder ist.

5. Vorrichtung (1) gemäß Anspruch 1, **dadurch gekennzeichnet, daß** das Verbindungselement (14, 14', 14") eine Traverse oder ein Rahmen ist.

6. Vorrichtung (1) gemäß Anspruch 1, **dadurch gekennzeichnet, daß** das Verbindungselement (14, 14', 14") eine Adapterplatte ist.

7. Vorrichtung (1) gemäß einem der Ansprüche 1 bis 6, **dadurch gekennzeichnet, daß** das erste Federelement (5, 5', 5") hängend oder stehend an dem Befestigungsträger (3) gefestigt ist.

8. Vorrichtung (1) gemäß einem der Ansprüche 1 bis 7, **dadurch gekennzeichnet, daß** das zweite Befestigungselement (15, 15', 15") hängend oder stehend an dem Verbindungselement (14, 14', 14") befestigt ist.

## Claims

1. Device for the vibration-absorbing mounting of a compressed-air generator system (2) on a mounting support (3) of a rail vehicle, comprising a first resilient element (5, 5', 5") that is adapted for being fastened on said mounting support (3), with a second resilient element (15, 15', 15") being provided that is connected in series with said first resilient element (5, 5', 5"), wherein one of said two resilient elements (5, 5', 5"; 15, 15', 15") presents a spring stiffness in a substantially vertical direction, which is at maximum as high as the spring stiffness in a substantially horizontal direction,
**characterised in that** said compressed-air generator system (2) is adapted for being fastened on said second resilient element (15, 15', 15"), and that moreover said first resilient element (5, 5', 5") and said second resilient element (15, 15', 15") are connected to each other by means of a connector element (14, 14', 14") configured as absorbing mass.

2. Device (1) according to Claim 1, **characterised in that** said other resilient element (5, 5', 5", 15, 15', 15") presents a spring stiffness in the horizontal direction, which is as high as the spring stiffness in the vertical direction at maximum.

3. Device (1) according to Claim 1 or 2, **characterised in that** said first resilient element (5, 5', 5") is a rubber element or a compound rubber element.

4. Device (1) according to any of the Claims 1 to 3, **characterised in that** said second resilient element (15, 15', 15") is a steel-wire rope spring.

5. Device (1) according to Claim 1, **characterised in that** said connector element (14, 14', 14") is a crossbeam or a frame.

6. Device (1) according to Claim 1, **characterised in that** said connector element (14, 14', 14") is an adapter plate.

7. Device (1) according to any of the Claims 1 to 6, **characterised in that** said first resilient element (5, 5', 5") is fastened on said mounting support (3) in suspended or upright position.

8. Device (1) according to any of the Claims 1 to 7, **characterised in that** said second fastening element (15, 15', 15") is mounted on said connector element (14, 14', 14") in a suspended or upright position.

## Revendications

1. Dispositif pour le montage, à amortissement de vibrations, d'un système générateur de l'air comprimé (2) à un support de fixation (3) d'un véhicule sur rails, (2) comprenant un premier élément ressort (5, 5', 5") apte à être fixé audit support de fixation (3), à un deuxième élément ressort (15, 15', 15") étant disposé, qui est relié en série avec ledit premier élément ressort (5, 5', 5"), dans lequel un desdits deux éléments ressorts (5, 5', 5"; 15, 15', 15") a une raideur de ressort en sens essentiellement vertical, qui est, au maximum, égale à la raideur de ressort en sens essentiellement horizontal,
**caractérisé en ce que** ledit système générateur de l'air comprimé (2) est apte à être fixé audit deuxième élément ressort (15, 15', 15"), et **en ce qu'**au plus, ledit premier élément ressort (5, 5', 5") et ledit deuxième élément ressort (15, 15', 15") sont reliés, l'un à l'autre, moyennant un élément connecteur (14, 14', 14") configuré en tant que masse absorbante.

2. Dispositif (1) selon la revendication 1, **caractérisé en ce que** ledit autre élément ressort (5, 5', 5", 15, 15', 15") présente une raideur de ressort en sens horizontal, qui est, au maximum, égale à la raideur de ressort en sens vertical.

3. Dispositif (1) selon la revendication 1 or 2, **caractérisé en ce que** ledit premier élément ressort (5, 5', 5") est en élément en caoutchouc ou en un matériau composite à caoutchouc.

4. Dispositif (1) selon une quelconque des revendications 1 to 3, **caractérisé en ce que** ledit deuxième élément ressort (15, 15', 15") est un ressort en câble d'acier.

5. Dispositif (1) selon la revendication 1, **caractérisé en ce que** ledit élément connecteur (14, 14', 14") est une traverse ou un cadre.

6. Dispositif (1) selon la revendication 1, **caractérisé en ce que** ledit élément connecteur (14, 14', 14") est une plaque d'adaptation.

7. Dispositif (1) selon une quelconque des revendications 1 to 6, **caractérisé en ce que** ledit premier élément ressort (5, 5', 5") est fixé audit support de fixation (3) en position suspendue ou debout.

8. Dispositif (1) selon une quelconque des revendications 1 to 7, **caractérisé en ce que** ledit deuxième élément de fixation (15, 15', 15") est monté audit élément connecteur (14, 14', 14")en position suspendue ou debout.
